# EUROPÄISCHE PATENTSCHRIFT

(11) **EP 2 465 787 B1**
(45) Veröffentlichungstag und Bekanntmachung des Hinweises auf die Patenterteilung: **29.07.2015**
(21) Anmeldenummer: 11187872.4
(22) Anmeldetag: 04.11.2011
(51) Int. Cl.: B65D 5/48, B65D 85/68, B65D 85/00

(54) **Verpackung für zwei Flachbalkenwischblätter**
Packaging for two flat bar wiper blades
Emballage pour deux raclettes d'essuie-glace à barre plate

(30) Priorität: 14.12.2010 DE 102010062989
(43) Veröffentlichungstag der Anmeldung: 20.06.2012
(73) Patentinhaber: Robert Bosch GmbH, 70442 Stuttgart (DE)
(72) Erfinder: Mueller, Asmus, 2544 Bettlach (CH)

(56) Entgegenhaltungen:
- WO-A1-03/101796
- DE-A1- 2 729 808
- DE-A1- 3 417 695
- DE-A1- 19 829 125
- DE-U1- 29 901 874
- FR-A1- 2 882 031
- US-A- 1 700 432
- US-A- 3 135 454

## Beschreibung

### Stand der Technik

Die Erfindung betrifft eine Verpackungseinheit mit zwei Flachbalkenwischblättern für Scheiben von Kraftfahrzeugen nach Gattung des Oberbegriffs von Anspruch 1 und die Verwendung einer Verpackungseinheit für die Verpackung von zwei Flachbalkenwischblättern.

Die meisten Kraftfahrzeuge weisen zwei Scheibenwischer zum Wischen der Kraftfahrzeugfrontscheibe auf, einen ersten Scheibenwischer für das Wischen der Kraftfahrzeugfrontscheibe auf der Fahrerseite und einen zweiten Scheibenwischer für das Wischen der Kraftfahrzeugfrontscheibe auf der Beifahrerseite. Da der erste und der zweite Scheibenwischer zeitgleich in Betrieb sind, unterliegen die Wischblätter der beiden Scheibenwischer eines Kraftfahrzeugs dem gleichen Verschleiß. Daher müssen das Wischblatt des ersten Scheibenwischers und das Wischblatt des zweiten Scheibenwischers üblicherweise auch zeitgleich ausgetauscht werden. Aber selbst wenn nur eines der beiden Wischblätter ausgetauscht werden muss wird häufig auch das andere Wischblatt ausgetauscht. Aus diesen Gründen ist es vorteilhaft, wenn die beiden Wischblätter für die beiden Scheibenwischer einer Kraftfahrzeugfrontscheibe in einer gemeinsamen Verpackungseinheit angeboten werden.

Aus der DE 102 24 431 A1 ist eine Verpackung für Wischblätter bekannt, die eine Faltschachtel sowie eine Einlage aufweist. Die Einlage ist aus einem Material ausgebildet, dessen Biegesteifigkeit in Krümmungsrichting der Wischblätter geringer ist als die der Wischblätter, so dass sich beim Herausziehen der Einlage aus der Faltschachtel die Wischblätter kontinuierlich aus ihrem in der Faltschachtel gestreckten Zustand in ihre im unbelasteten Zustand gekrümmte Form biegen und sich bei der Entnahme nicht schlagartig entspannen.

Mit der EP 1 140 586 A1 wird eine Verpackungseinheit für eine in dieser zumindest bereichsweise untergebrachtes Wischblatt für Scheiben von Kraftfahrzeugen vorgeschlagen, welches eine langgestreckte, gummielastische, an einem bandartig langgestreckten federelastischen Tragelement längsachsenparallel gehaltene Wischleiste mit einer an einer Scheibe anlegbaren Wischlippe hat, wobei das unbelastet über seine Bandflächen gekrümmte Tragelement bezüglich der entsprechend gekrümmten Wischlippe außenliegend angeordnet ist. Eine raumsparende Verpackung wird erreicht, indem das Wischblatt in Längsrichtung gesehen beidseitig einer Symmetrieebene mit quer zu dieser ausgerichteten Stützen versehen ist, und die Verpackungseinheit als gestrecktes, im Querschnitt rinnenartiges in Längsrichtung steifes Bauteil ausgebildet ist, welches mit seiner Rinnenbasis die Symmetrieebene der Wischleiste mit Abstand von der Wischlippe diese über deren gesamte Länge quert und im Bereich der Rinnen-Längskanten mit den Stützflächen des Wischblatts zugeordneten Abstützungen versehen ist, die das Wischblatt gegen die Federkraft des Tragelements in eine zumindest im wesentlichen gestreckte Position zwingen.

Die bekannte Verpackungseinheit kann als so genannte Doppeleinheit ausgebildet werden, beispielsweise indem zwei Einzeleinheiten entlang ihrer Rinnenbasen miteinander verbunden werden, oder indem die beiden zu einer Doppel-Verpackungseinheit gehörenden Einzeleinheiten eine gemeinsame Rinnenwange aufweisen.

Bis zum heutigen Tage gibt es jedoch keine transparente Verpackung für zwei Flachbalkenwischblätter. Derzeit werden einzelne Flachbalkenwischblätter in einer so genannte "Kissenpackung" angeboten, also in einem schlauch- oder kissenförmigen Behältnis, das entlang einer Linie geöffnet werden kann.

Flachbalkenwischblätter bieten eine bessere Wischleistung und sind langlebiger als herkömmliche Bügelscheibenwischer. Flachbalkenwischblätter haben keine Gelenke und keinen Bügel, sondern eine langgestreckte, gummielastische, an einem bandartig langgestreckten federelastischen Tragelement längsachsenparallel gehaltene Wischleiste mit einer an einer Scheibe anlegbaren Wischlippe, wobei das unbelastet über seine Bandflächen gekrümmte Tragelement bezüglich der entsprechend gekrümmten Wischlippe außenliegend angeordnet ist. Bei Flachbalkenwischblättern ist die Druckverteilung auf die Scheibe gleichmäßiger über die Länge der Wischlippe verteilt als bei konventionellen Bügelscheibenwischern.

### Offenbarung der Erfindung

Die Vorliegende Erfindung betrifft eine Verpackungseinheit mit zwei Flachbalkenwischblättern gemäß Anspruch 1 und die Verwendung einer Verpackungseinheit für die Verpackung von zwei Flachbalkenwischblättern gemäß Anspruch 9.

Die Verpackungseinheit bietet den Vorteil, dass sie bei kostengünstiger Herstellbarkeit zwei Flachbalkenwischblätter in einer gemeinsamen Verpackung enthalten kann, wobei sich die beiden Flachbalkenwischblätter gegenseitig in der richtigen Position halten, um Liegefehler der Flachbalkenwischblätter zu vermeiden, die zu einer Beschädigung der Wischlippe eines der Flachbalkenwischblätter oder der Wischlippen beider Flachbalkenwischblätter führen könnten. Zudem ist der Raumbedarf der Verpackung relativ gering und die Verpackung kann als rechteckige Faltschachtel ausgebildet sein, die eine raumsparende Lagerung und/oder Präsentation des Flachbalkenwischerblätterpaares ermöglicht. Ein weiterer Vorteil der Verpackungseinheit ist, dass sie kostengünstig unter Nutzung von industriellen Standardklebemaschinen hergestellt werden kann.

Die Verpackungseinheit umfasst eine rechteckige beziehungsweise quaderförmige, lang gestreckte Faltschachtel. Diese Faltschachtel weist in ihrem Inneren eine Trennwand auf, die sich in Längsrichtung der Faltschachtel im Wesentlichen über die gesamte Innenlänge erstreckt. Durch diese Trennwand wird der Innenraum der Faltschachtel in zwei separate Kompartimente unterteilt, von denen jedes ein Flachbalkenwischblatt aufnehmen kann. Der Querschnitt der beiden Kompartimente ist im Wesentlichen dreieckig oder rautenförmig, so dass eine formschlüssige Verpackung der beiden Flachbalkenwischblätter möglich ist.

In einer Ausführungsform der Verpackungseinheit ist die Trennwand in die Faltschachtel einschiebbar beziehungsweise aus der Faltschachtel herausnehmbar. Die Trennwand ist bei dieser Ausführungsform nicht fest mit der Faltschachtel verbunden, sondern wird als separates Bauteil bereitgestellt, das beispielsweise gleichzeitig mit den zu verpackenden Flachbalkenwischblättern in die Faltschachtel eingeführt werden kann. Dies erleichtert das Verpacken des Flachbalkenwischblätterpaares.

In einer alternativen Ausführungsform ist die Trennwand mit einer oder zwei Seitenwänden der Faltschachtel fest verbunden. Die Befestigung der Trennwand in der Faltschachtel kann bereits während der Herstellung der Faltschachtel aus ihrem Zuschnitt erfolgen, beispielsweise indem die Trennwand mit der Faltschachtel verklebt oder verschweißt wird. Vorzugsweise ist die Trennwand nur entlang einer ihrer beiden Längskanten mit einer Seitenwand der Faltschachtel verbunden. Bei dieser Ausführungsform fixieren die beiden Flachbalkenwischblätter in der Faltschachtel die als Klappe ausgebildete Trennwand gegenseitig in der richtigen Position, so dass die Flachbalkenwischblätter keine Liegefehler bekommen.

In einer besonderen Ausgestaltung der vorgenannten Ausführungsform ist die Trennwand ein Teil eines einteiligen Zuschnitts für die Faltschachtel. Die Faltschachtel kann aus dem Zuschnitt durch Auffalten und in Abhängigkeit vom Material durch Kleben oder Siegeln gefertigt werden. Dadurch ist eine besonders kostengünstige Herstellung der Verpackungseinheit möglich, denn die Faltschachtel kann aus einem einzigen Stanzling und mit industriellen Standardklebemaschinen gefertigt werden.

Die Trennwand kann parallel zu einer der Seitenwände der Faltschachtel angeordnet sein. Vorzugsweise ist die Trennwand diagonal oder quasi-diagonal verlaufend, bezogen auf den Querschnitt der langgestreckten Faltschachtel, angeordnet. Quasi-diagonal verlaufend bedeutet, dass die Trennwand nicht an der Kante befestigt oder angelenkt ist, an der zwei benachbarte Seitenwände aneinander stoßen, sondern von der Kante, an der die beiden benachbarten Seitenwände aneinander stoßen, beabstandet ist.

Die Abmessung der Verpackungseinheit kann variieren und ist abhängig von den Abmessungen der zu verpackenden Flachbalkenwischblätter. Die Verpackungseinheit kann grundsätzlich aus allen geeigneten Materialien gefertigt werden. Vorzugsweise besteht die Verpackungseinheit aus Karton oder Pappe, die gegebenenfalls mit Kunststoff beschichtet sein können. Besonders bevorzugt besteht die Faltschachtel aus Kunststoff, und ganz besonders bevorzugt aus einem transparenten Kunststoff, so dass der Inhalt der Verpackungseinheit auch in verpacktem Zustand sichtbar ist. Bei Ausführungsformen, bei denen die Faltschachtel aus einem nicht transparenten Material gefertigt wurde, kann vorgesehen sein, dass zumindest eine Seitenwand der Faltschachtel mit einem Sichtfenster versehen ist. Bei dem Sichtfenster kann es sich um eine offene Öffnung in der Seitenwand handelt. Vorzugsweise ist die Öffnung in der Seitenwand mit einer transparenten Folie verschlossen, die auf der Außenfläche der Seitenwand, der Innenfläche der Seitenwand aufgebracht oder zwischen zwei Lagen einer aus mehreren Lagen bestehenden Seitenwand eingefügt sein kann.

Die Faltschachtel kann aus ihrem Zuschnitt durch Falten und Verkleben oder verschweißen gefertigt werden. Auch die Trennwand kann durch kleben oder siegeln in der Faltschachtel befestigt werden.

In einer Ausführungsform erstreckt sich die Trennwand über die gesamte Innenlänge der Faltschachtel. Bei Ausführungsformen, bei denen eine Einstecklasche auf der Seite der Faltschachtel einsteckbar sein soll, an der die Trennwand an der Seitenwand angelenkt ist, weist entweder die Einstecklasche eine Aussparung auf, die die Trennfand nach Einstecken der Lasche umgreift, oder die Trennwand reicht in diesem Bereich nicht bis an die Stirnfläche der Faltschachtel, sondern ist von der Stirnfläche beabstandet, zumindest um die Länge der Einstecklasche, so dass die Faltschachtel ordnungsgemäß verschließbar ist.

Die Verpackungseinheit dient dem Verpacken von zwei Flachbalkenwischblättern. Die beiden Flachbalkenwischblätter können gleich lang sein oder unterschiedliche Längen haben.

Die Erfindung wird nachfolgend an Hand der Zeichnungen und mit Hilfe eines in den Zeichnungen dargestellten Ausführungsbeispiels näher erläutert. Hierbei ist zu berücksichtigen, dass die Zeichnungen und das Ausführungsbeispiel lediglich zur Veranschaulichung der Erfindung dienen, die Erfindung aber in keiner Weise einschränkend aufzufassen sind.

Es zeigen:
- Fig. 1: die Seitenansicht eines Flachbalkenwischblatts in seinem unbelasteten Zustand;
- Fig. 2: die Querschnittsfläche entlang der Linie II-II durch die Ausführungsform des Wischblatts gemäß Fig. 1;
- Fig. 3: eine Ausführungsform der erfindungsgemäßen Verpackungseinheit mit zwei darin angeordneten Flachbalkenwischblättern.

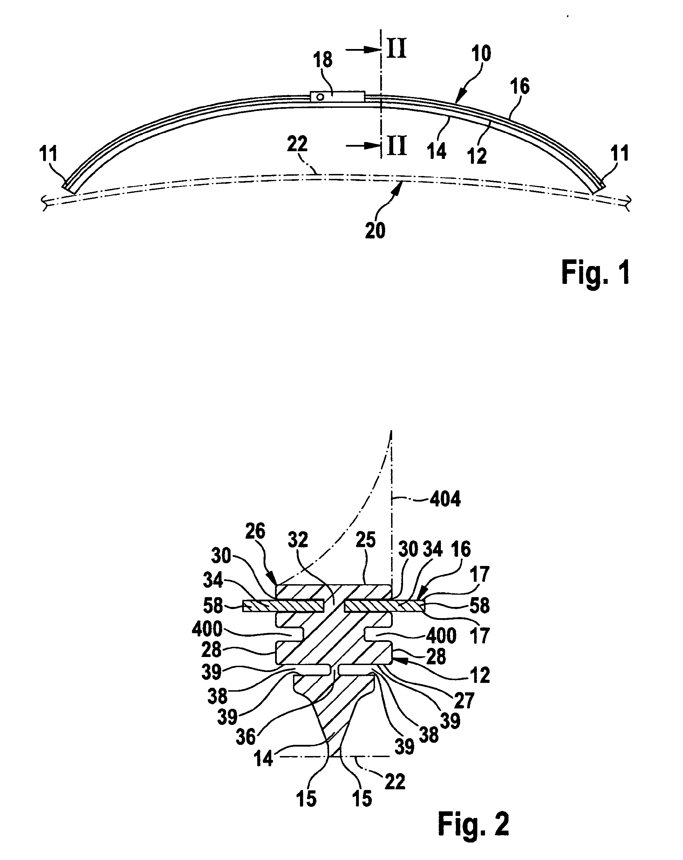

Das in Figur 1 in Seitenansicht dargestellte Flachbalkenwischblatt 10 weist eine lang gestreckte, gummielastische Wischleiste 12 auf, die mit ihrer Wischlippe 14 an der zu wischenden Oberfläche 22 eine Kraftfahrzeugscheibe 20 anlegbar ist. Die Wischleiste 12 wird längsachsenparallel von einem langgestreckten, federelastischen Tragelement 16 gehalten und bildet mit diesem zusammen das Flachbalkenwischblatt 10. Das Flachbalkenwischblatt 10 weist darüber hinaus eine Anschlussvorrichtung 18 auf, mit der es mit einem Wischerarm (nicht dargestellt) verbunden werden kann. Figur 1 zeigt darüber hinaus den Querschnitt durch eine Kraftfahrzeugscheibe 20, die strichpunktiert dargestellt ist und deren zu wischende Oberfläche 22 der leistenartigen Wischlippe 14 des Wischblatts 10 zugewandt ist. Das Flachbalkenwischblatt 10 ist in unbelastetem Zustand dargestellt, berührt jedoch mit seinen beiden Enden 11 die Oberfläche 22 des Kraftfahrzeugscheibe 20. Erkennbar ist, dass das Flachbalkenwischblatt 10 in unbelastetem Zustand eine stärkere Krümmung aufweist als die Kraftfahrzeugscheibe 20. Die Krümmung des Flachbalkenwischblatts 10 rührt von einer entsprechenden Krümmung des Tragelements 16 her. Bezüglich der so bewirkten Krümmung der Wischlippe 14 ist das Tragelement 16 außen liegend angeordnet.

Figur 2 zeigt einen Querschnitt durch eine Ausführungsform des Flachbalkenwischblatts 10 gemäß Figur 1 entlang der Linie II-II in vergrößerter Darstellung. Bei der Ausführungsform gemäß Figur 2 weist die Wischleiste 12 eine Kopfleiste 26 auf, die mit zwei einander gegenüberliegenden, zu ihren Seitenflächen 28 offenen Längsnuten 30 versehen ist, wobei zwischen den beiden Nuten 30 eine Wand 32 verbleibt. Die Längsnuten 30 dienen zur Aufnahme von jeweils einer langgestreckten Federschiene 34, die beide zum Tragelement 16 gehören. An die Kopfleiste schließt sich die lang gestreckte Wischlippe 14 an, welche über einen sogenannten Kippsteg 36 mit der Unterseite der 27 der Kopfleiste 26 verbunden ist.

Darüber hinaus sing in der Kopfleiste 26 einander gegenüberliegende, zu den Seitenflächen 28 der Kopfleiste 26 hin offene Längsnuten 400 angeordnet, die zur besseren Anpassung des Wischblatts an die Form der Scheibenoberfläche beitragen können.

In einer besonderen Ausführungsform kann an der von der Wischlippe 14 abgewandten Oberseite 25 der Kopfleiste 26 diese in eine so genannte Windabweisleiste 404 übergehen, die in Figur 2 strichpunktiert dargestellt ist. Die Windabweisleiste erstreckt sich üblicherweise über die gesamte Länge des Wischblatts beziehungsweise der Wischleiste.

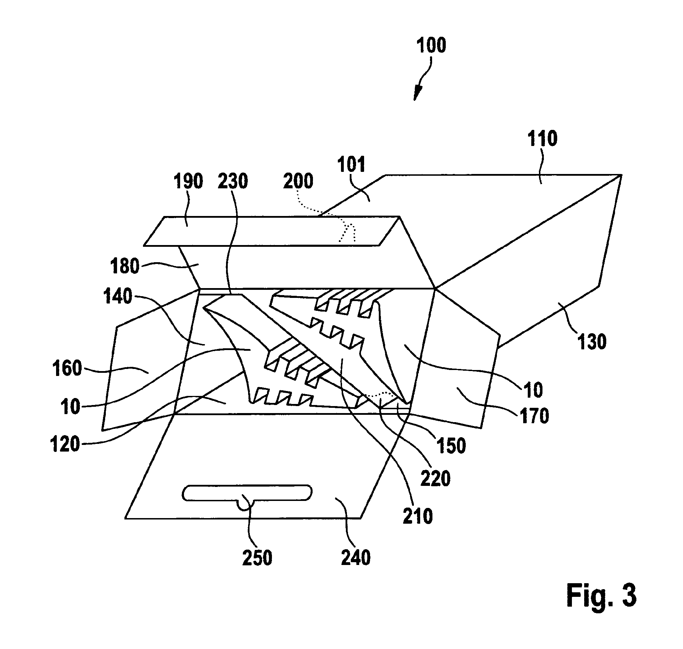

Um die Wischblätter gemäß den Figuren 1 und 2 aus den eingangs erwähnten Gründen unbeschädigt zum Endverbraucher gelangen zu lassen, sind deren besonders sensiblen Bereiche an der Wischlippe 14 ausgebildete Wischkanten 15 durch erfindungsgemäße Verpackungseinheiten zu schützen, von denen eine erste Ausführungsform anhand der Figur 3 näher erläutert wird.

Die aus einem steifen Packstoff bestehende, lang gestreckte, quaderförmige Faltschachtel 100 weist einen hülsenförmigen Rumpf 101 mit zwei zueinander parallelen Breitseitenwänden 110, 120 und zwei zueinander parallelen Schmalseitenwänden 130, 140 auf. Die eine Breitseitenwand 120 ist an ihrer Innenfläche mit einer an der Schmalseitenwand 130 angelenkten Längsklebelasche 150 verbunden. Die boden- und deckelseitigen Stirnflächen des Rumpfes 101 sind durch an den Seitenwänden angelenkte, in die jeweiligen Stirnflächen umfaltbare Verschlusslaschen verschließbar. So ist an der deckelseitigen Kante der Schmalseitenwand 120 die Verschlusslasche 160 und an der deckelseitigen Kante der gegenüber liegenden Schmalseitenwand 170 die Verschlusslasche 170 angelenkt. An der deckelseitigen Kante der Breitseitenwand 110 ist die Verschlusslasche 180 angelenkt. An der Kante der Verschlusslasche 180, die parallel zu der Kante verläuft, über die die Verschlusslasche 180 an der Breitseitenwand 110 angelenkt ist, ist eine Einstecklasche 190 angelenkt.

Die Verpackungseinheit weist eine Trennwand 210 auf, die an der Längsklebelasche 150 angelenkt ist. An der Trennwand 210 ist eine Längslasche 230 an der Kante angelenkt, die parallel zu der Kante der Trennwand 210 verläuft, an der die Trennwand 210 mit der Längsklebelasche 150 verbunden ist. Die Längslasche 230 kann als Klebelache ausgebildet und mit der Innenfläche der Breitseitenwand 110 verbunden sein. Es ist aber auch möglich, die Längslasche 230 nicht mit der Breitseitenwand 110 oder einer anderen Seitenwand zu verbinden. Die Trennwand 210 unterteilt den Innenraum der Verpackungseinheit 100 in Bezug auf den Querschnitt schräg verlaufend in zwei Kompartimente. Da sich die Trennwand 210 nicht von der gemeinsamen Kante der Breitseitenwand 120 und der Schmalseitenwand 130 zur gemeinsamen Kante der Breitseitenwand 110 und der Schmalseitenwand 140 erstreckt, sondern um die Breite der Längsklebelasche 150 und die Breite der Längslasche 230 zur Längsachse der Verpackungseinheit hin versetzt den Innenraum der Verpackung schräg verlaufend unterteilt, wird von einer quasi-diagonalen Unterteilung gesprochen. Dadurch entstehen zwei gleich geformte, im Wesentlichen einen dreieckigen oder rautenförmigen Querschnitt aufweisende Kompartimente zur Aufnahme je eines Flachbalkenwischblatts 10, die auf diese Weise formschlüssig verpackt werden können.

Die in Fig. 3 dargestellte Verpackungseinheit ist verschließbar, indem zunächst die Verschlusslaschen 160, 170 in die deckelseitige Stirnfläche umgefaltet werden. Anschließend wird die Verschlusslasche 180 auf die deckelseitige Stirnfläche umgefaltet, wobei die Einstecklasche 190 im Wesentlichen parallel zur Breitseitenwand 120 in die Verpackungseinheit eingesteckt wird. Damit ein formschlüssiger Verschluss der Verpackungseinheit möglich wird, muss entweder die Einstecklasche 190 mit einer in der Figur 3 gestrichelt dargestellte Aussparung 200 versehen sein, oder die Trennwand 210 muss in dem Bereich ihrer deckelseitigen Kante, der der Längsklebelasche 150 zugewandt ist, einen Einschnitt 220 aufweisen, der in der Figur 3 gestrichelt dargestellt ist.

Die Verpackungseinheit gemäß Figur 3 weist eine Aufhängelasche 240 auf, die mit einer Aufhängeöffnung 250 versehen ist. Mit dieser Ausführungsform können die Verpackungseinheiten an geeigneten Befestigungsmöglichkeiten hängend gelagert und/oder präsentiert werden. Bei alternativen Ausführungsformen kann aber auch auf eine Aufhängelasche 240 verzichtet und die Aufhängelasche 240 als Verschlusslasche ausgebildet sein, die auf die deckelseitige Stirnfläche umfaltbar ist.

An der bodenseitigen Stirnfläche der Verpackungseinheit 100 weist keine Seitenwand eine an ihr angeordnete Aufhängelasche auf. Die Verpackungseinheit 100 weist bodenseitig nur Verschlusslaschen auf.

Die Verschlusslaschen zum deckelseitigen und/oder bodenseitigen Verschließen der Verpackungseinheit können die Verpackungseinheit verschließen, indem eine der Verschlusslaschen eine Einstecklasche aufweist, die in die Verpackungseinheit einsteckbar ist. Alternativ können die Verschlussleisten deckelseitig und/oder bodenseitig fest miteinander verbunden werden, beispielsweise indem sie miteinander verklebt oder verschweißt werden.

In der Faltschachtel ist ein Einsatz angeordnet, der das Innere der Faltschachtel in Längsrichtung unterteilt. Die Trennwand kann parallel zu einer der Seitenwände in der Faltschachtel angeordnet sein.

In einer bevorzugten Ausführungsform verläuft die Trennwand diagonal oder quasi diagonal zwischen parallel zueinander angeordneten Seitenwänden. Quasi diagonal bedeutet, dass die Trennwand nicht von einer Ecke zur schräg gegenüberliegenden Ecke verläuft, sondern auf einer oder beiden Seiten zur Mittellinie der Seitenwand hin versetzt angesetzt ist.

## Patentansprüche

1. Verpackungseinheit mit zwei Flachbalkenwischblättern (10), umfassend eine quaderförmige, langgestreckte Faltschachtel, **dadurch gekennzeichnet, dass** die Faltschachtel (100) in ihrem Inneren eine Trennwand (210) aufweist, welche sich in Längsrichtung der Faltschachtel (100) erstreckt, wobei die Trennwand (210) diagonal oder quasi-diagonal, bezogen auf den Querschnitt der Faltschachtel, verläuft und den Innenraum der Faltschachtel (100) in zwei separate Kompartimente unterteilt, von denen jedes ein Flachbalkenwischblatt (10) aufnimmt.

2. Verpackungseinheit gemäß Anspruch 1, **dadurch gekennzeichnet, dass** die Trennwand (210) aus der Faltschachtel (100) herausnehmbar ist.

3. Verpackungseinheit gemäß Anspruch 1, **dadurch gekennzeichnet, dass** die Trennwand (210) fest mit zumindest einer Seitenwand (130, 140) der Faltschachtel verbunden ist.

4. Verpackungseinheit gemäß Anspruch 3, **dadurch gekennzeichnet, dass** die Trennwand (210) als separates Bauelement in der Faltschachtel (100) eingeklebt ist.

5. Verpackungseinheit gemäß Anspruch 3, **dadurch gekennzeichnet, dass** die Trennwand (210) Bestandteil eines einteiligen Zuschnitts für die Faltschachtel ist.

6. Verpackungseinheit gemäß einem der vorhergehenden Ansprüche, **dadurch gekennzeichnet, dass** sie aus Karton, Pappe oder Kunststoff besteht.

7. Verpackungseinheit gemäß einem der vorhergehenden Ansprüche, **dadurch gekennzeichnet, dass** sie ein Sichtfenster aufweist.

8. Verpackungseinheit gemäß einem der vorhergehenden Ansprüche, **dadurch gekennzeichnet, dass** sie eine Aufhängeöffnung (250) aufweist.

9. Verwendung einer Verpackungseinheit, umfassend eine quaderförmige, langgestreckte Faltschachtel (100), die in ihrem Inneren eine Trennwand (200) aufweist, welche sich in Längsrichtung der Faltschachtel (100) erstreckt, wobei die Trennwand (210) diagonal oder quasi-diagonal, bezogen auf den Querschnitt der Faltschachtel, verläuft und den Innenraum der Faltschachtel in zwei separate. Kompartimente unterteilt, für die Verpackung von zwei Flachbalkenwischblättern (10).

## Claims

1. Packaging unit having two flat-bar wiper blades (10), comprising a ashlar-formed elongated folding box, **characterized in that** the folding box (100) in its interior has a dividing wall (210) which extends in the longitudinal direction of the folding box (100), wherein the dividing wall (210) runs diagonally or quasi diagonally in relation to the cross section of the folding box and subdivides the interior space of the folding box (100) into two separate compartments of which each receives one flat-bar wiper blade (10).

2. Packaging unit according to Claim 1, **characterized in that** the dividing wall (210) is removable from the folding box (100).

3. Packaging unit according to Claim 1, **characterized in that** the dividing wall (210) is fixedly connected to at least one side wall (130, 140) of the folding box.

4. Packaging unit according to Claim 3, **characterized in that** the dividing wall (210) is adhesively bonded into the folding box (100) as a separate construction element.

5. Packaging unit according to Claim 3, **characterized in that** the dividing wall (210) is a component part of a single-part blank for the folding box.

6. Packaging unit according to one of the preceding claims, **characterized in that** said packaging unit is composed of cardboard, paperboard, or plastic.

7. Packaging unit according to one of the preceding claims, **characterized in that** said packaging unit has a viewing window.

8. Packaging unit according to one of the preceding claims, **characterized in that** said packaging unit has a hanger opening (250).

9. Use of a packaging unit, comprising an ashlar-formed elongated folding box (100) which in its interior has a dividing wall (210) which extends in the longitudinal direction of the folding box (100), wherein the dividing wall (210) runs diagonally or quasi diagonally in relation to the cross section of the folding box and subdivides the interior space of the folding box (100) into two separate compartments, for packaging two flat-bar wiper blades (10).

## Revendications

1. Unité d'emballage comprenant deux balais d'essuie-glace à barre plate (10), comprenant une boîte pliante allongée de forme parallélépipédique, **caractérisée en ce que** la boîte pliante (100) présente en son intérieur une paroi de séparation (210) qui s'étend dans la direction longitudinale de la boîte pliante (100), la paroi de séparation (210) s'étendant en diagonale ou presque en diagonale, par rapport à la section transversale de la boîte pliante et divisant l'espace interne de la boîte pliante (100) en deux compartiments séparés dont chacun reçoit un balai d'essuie-glace à barre plate (10).

2. Unité d'emballage selon la revendication 1, **caractérisée en ce que** la paroi de séparation (210) peut être enlevée de la boîte pliante (100).

3. Unité d'emballage selon la revendication 1, **caractérisée en ce que** la paroi de séparation (210) est connectée fixement à au moins une paroi latérale (130, 140) de la boîte pliante.

4. Unité d'emballage selon la revendication 3, **caractérisée en ce que** la paroi de séparation (210) est collée en tant que composant séparé dans la boîte pliante (100).

5. Unité d'emballage selon la revendication 3, **caractérisée en ce que** la paroi de séparation (210) fait partie d'une pièce découpée d'une seule pièce pour la boîte pliante.

6. Unité d'emballage selon l'une quelconque des revendications précédentes, **caractérisée en ce qu'**elle se compose de carton, de papier rigide ou de plastique.

7. Unité d'emballage selon l'une quelconque des revendications précédentes, **caractérisée en ce qu'**elle présente une fenêtre de vue.

8. Unité d'emballage selon l'une quelconque des revendications précédentes, **caractérisée en ce qu'**elle présente une ouverture d'accrochage (250).

9. Utilisation d'une unité d'emballage comprenant une boîte pliante allongée de forme parallélépipédique (100) qui présente en son intérieur une paroi de séparation (210) qui s'étend dans la direction longitudinale de la boîte pliante (100), la paroi de séparation (210) s'étendant en diagonale ou presque en diagonale, par rapport à la section transversale de la boîte pliante et divisant l'espace interne de la boîte pliante en deux compartiments séparés, pour l'emballage de deux balais d'essuie-glace à barre plate (10).
